(19)

Europäisches
Patentamt
European
Patent Office
Office européen
des brevets

(11) **EP 1 993 293 A1**

(12) **EUROPEAN PATENT APPLICATION**

(43) Date of publication:
**19.11.2008 Bulletin 2008/47**

(51) Int Cl.:
**H04N 9/67** (2006.01)     **H04N 9/68** (2006.01)

(21) Application number: **07108241.6**

(22) Date of filing: **15.05.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **VIA Technologies, Inc.**
**Taipei, Taiwan (TW)**

(72) Inventors:
• **Yu, Sheng**
  **Taipei (TW)**
• **Chung, Paul**
  **Taipei (TW)**
• **Chen, Yi-Peng**
  **Taipei (TW)**

(74) Representative: **Viering, Jentschura & Partner**
**Grillparzerstrasse 14**
**81675 München (DE)**

(54) **System and method of image processing**

(57)     A system and method of image processing are disclosed. A driver predetermines parameters associated with color adjustment and color space conversion. Upon receiving image data under processing, a single-module converter simultaneously performs the color adjustment and the color space conversion on image data according to the single set of the parameters predetermined by the driver.

FIG. 1

**EP 1 993 293 A1**

**Description**

**BACKGROUND OF THE INVENTION**

**1. FIELD OF THE INVENTION**

The present invention generally relates to system and method of image processing, and more particularly to a video processor that simultaneously performs color adjustment and color space conversion.

**2. DESCRIPTION OF THE PRIOR ART**

Video processors are specialized microprocessors designed specifically for performing digital image processing on an image or a video. Color adjustment (usually abbreviated as CA) is one of many tasks that the video processor performs. Through the color adjustment, pertinent attributes, such as saturation, hue, or brightness of the image data are adjusted or changed to suit user's specified need. The color adjustment in the video processor is conventionally done in a specifically dedicated module according to the following formulas or equations (1a-1c):

$$Y' = A1 * Y + B1 * Cb + C1 * Cr + D1 \tag{1a}$$

$$Cb' = A2 * Y + B2 * Cb + C2 * Cr + D2 \tag{1b}$$

$$Cr' = A3 * Y + B3 * Cb + C3 * Cr + D3 \tag{1c}$$

where Y, Cb and Cr are image data to be adjusted; Y', Cb' and Cr' are adjusted image data; and A1-A3, B1-B3, C1-C3 and D1-D3 are color adjustment weights that are provided by a driver according to the user's specified need, and are thus usually varied according to the user's need.
Color space conversion (usually abbreviated as CSC) is another task that the video processor performs. A color space is a representation or model of a set of colors. There are many color models or color spaces used in the field of digital image processing. The YCbCr mentioned above is one of them, and RGB, YIQ, YUV are also popular color spaces. As no universal color space is adaptable for all applications of digital image processing, it becomes inevitable that conversion between or among various color spaces is needed. For example, RGR color space is widely used in computer graphics or display. However, the RGB color space is not an efficient choice in processing an image in the video processor. Instead, YCbCr color space is usually used in the video processor for processing the image. Take the standard of standard-definition television (SDTV) for example, the color space conversion in the video processor is conventionally done in another specifically dedicated module, different from the color adjustment module, according to the following formula or equations (2a-2c):

$$R = 1.164 * (Y'-16) + 1.596 * (Cr'-128) \tag{2a}$$

$$G = 1.164 * (Y'-16) - 0.813 * (Cr'-128) - 0.391 * (Cb'-128) \tag{2b}$$

$$B = 1.164 * (Y'-16) + 2.018 * (Cr'-128) \tag{2c}$$

where the parameters 1.164, 1.596, etc are usually fixed constants for a specific standard.
In either the color adjustment (equations 1a-1c) or the color space conversion (equations 2a-2c), numerous mathematical operations are required to complete the task for each pixel. Each pixel of the whole processed image of a frame of frames repeatedly follows the same procedure to perform or execute these operations. Accordingly, in the conventional video processor, as the image data are processed according to the set of operation equations 1a-1c, followed by another set of operation equations 2a-2c, considerable time is thus devoted and abundant of energy is consumed.

Another drawback of the conventional video processor comes from its inherent multi-module structure, i.e., the color-adjustment module and the color-space-conversion module. In this multi-module structure, as each module usually drops some least significant bit(s) before or after its respective operation, the loss of degree of accuracy accumulated through the multiple modules thus becomes significant.

Furthermore, multi-module circuitries required to implement respective mathematical operations (1a-1c and 2a-2c) in the conventional multi-module structure occupy precious area of the processor chip.

For the aforementioned reasons that conventional video processor could not perform the color adjustment and color space conversion in an efficient way, a need has arisen to propose a simple, easy-to-design, fast, high degree of accuracy, energy-conservative, and area-reduced video processor.

## SUMMARY OF THE INVENTION

In view of the foregoing, the present invention provides a system and method of image processing whose structure is simplified, easy-to-design, high degree of accuracy, chip-area reduced, fast, or energy-conservative.

The present invention provides a video processor with a flexible color converter ("flexible CSC") that could simultaneously perform color adjustment and color space conversion, and could be implemented in a single-module structure.

According to one embodiment, the present invention provides a system of image processing, which includes a driver and a converter. The driver predetermines parameters associated with color adjustment and color space conversion. The converter then simultaneously performs the color adjustment and the color space conversion on image data according to the parameters predetermined by the driver.

According to another embodiment, the present invention provides a method of image processing. Parameters associated with color adjustment and color space conversion are predetermined. Upon receiving image data under processing, the color adjustment and the color space conversion are simultaneously performed, for example, by a single-module converter, on the image data according to the single set of the predetermined parameters.

## BRIEF DESCRIPTION OF THE DRAWINGS

Fig. 1 illustrates a block diagram of a system of image processing according to one embodiment of the present invention;
Fig. 2 shows a detailed circuit of the flexible CSC of Fig. 1; and
Fig. 3 shows a flow chart illustrating a method of image processing according to one embodiment of the present invention.

## DETAILED DESCRIPTION OF THE INVENTION

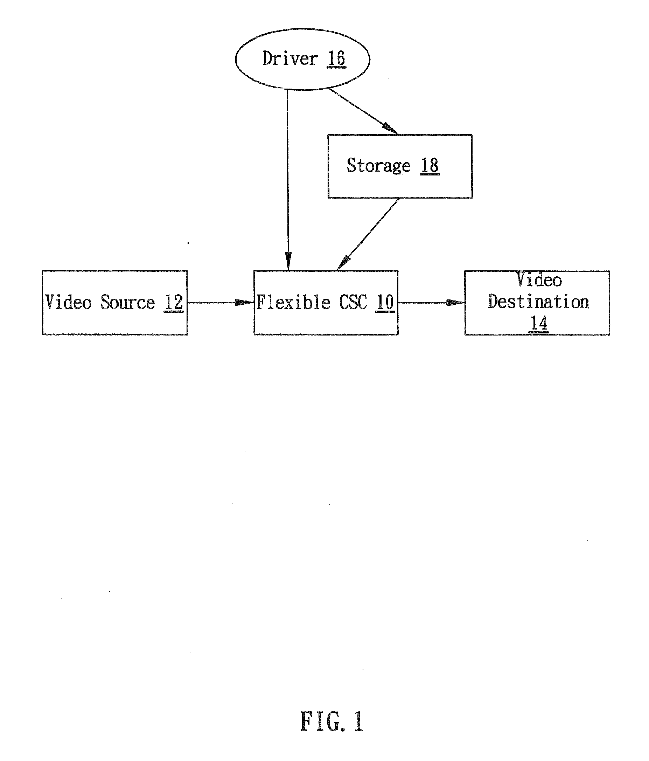

Fig. 1 illustrates a block diagram of a system of image processing according to one embodiment of the present invention. In this embodiment, the system includes a video processor, and only pertinent portion of the video processor is shown in the figure. In this embodiment, the video processor is used to perform digital image processing on the video data of a video or motion pictures; however, the video processor could be used to perform digital image processing on the image data of an image or a still picture as well. For generality, the term "image data" is used in the following disclosure; however, it is appreciated by the person skilled in the art that the term "image data" may be adaptable for a video system as well as an image system.

Referring to Fig. 1, the module designated as 10 is referred to as a flexible color space converter ("flexible CSC" hereinafter for brevity) in this disclosure, but other names, however, could be used. In the embodiment, the flexible CSC 10 performs or executes the color adjustment and the color space conversion simultaneously. It is appreciated by the person skilled in the art that the performed order of the color adjustment and the color space conversion may be interchanged. In the embodiment, through the color adjustment (CA), pertinent attributes, such as but not limited to, saturation, hue, or brightness of the image data could be adjusted or changed to suit user's specified need. For example, user could define and input the adjustment through the control buttons of a display monitor, or through an application program. The adjustment of the color adjustment is then directly or indirectly fed to a driver 16, which will be described later in this disclosure. In the embodiment, image data is converted from color space YCbCr to RGB. However, it is appreciated that the present invention is definitely not limited to any particular color space. The choice of color spaces under conversion and to be converted to are accorded to specific application or need.

The flexible CSC 10 inputs image data from a video source 12, which may be part of the video process, or may be external to the video processor. For example, if the video source 12 is part of the video processor, it may acts as an interface between the flexible CSC 10 and an external device. The image data represent the image signals (or digital image signal) or image to be processed, and could be acquired through image acquisition, such as from a physical sensor. The image data could alternatively be computer-generated image data or computer-processed image data from the same computer in which the video processor resides, or from another computer.

The flexible CSC 10 outputs the processed or converted image data to a video destination 14, which may be part of the video process, or may be external to the video processor. The video destination 14 could be, for example, an interface for displaying (including printing) the converted image data. The video destination 14 could alternatively be a portion internal or external to the video processor, for further processing the converted image data. The video destination 14 could also be a memory for temporarily or permanently storing the converted image data. The video destination 14 could also be a communication module (such as a bus or network) for transmitting the converted image data to another processor or another computer.

Still referring to Fig. 1, a driver designated as 16 provides pertinent parameters to the flexible CSC 10 to perform the specified operations, and will be described in details later. The term "driver" in this disclosure conforms to the ordinary meaning used in the pertinent field. Specifically, the driver 16 is, for example, a software or firmware component developed to allow interaction with the flexible CSC 10, and thus to constitute an interface for communication with the flexible CSC 10. The driver 16 may be part of the video processor, or be external to the video processor. The parameters provided by the driver 16 could be temporarily or permanently stored in an internal or external storage area 18, such as register or semiconductor memory, waiting to be accessed by the flexible CSC 10 when needed, or could be directly transferred to the flexible CSC 10. It is particularly noted that the flexible CSC 10 constructs the video processor in a single-module structure, in which the color adjustment (CA) and the color space conversion (CSC) are simultaneously performed, as compared to the conventional multi-module structure in which the color adjustment and the color space conversion are performed in sequence and respectively.

Regarding the operation of the present invention, in the specific embodiment, the flexible CSC 10 receives image data YCbCr. Although YCbCr color space is used in this embodiment, nevertheless, other color space, such as YUV, YIQ, RGB or other color space could be alternatively used. The flexible CSC 10 simultaneously performs the color adjustment on the image data YCbCr, and converting the color space from YCbCr to RGB according to the following formula or equations (3a-3c). It is appreciated by the person skilled in the art that the converted image data RGB may be non-gamma-corrected image data, or gamma-corrected image data.

$$R = A1 * Y + B1 * Cb + C1 * Cr + D1 \qquad (3a)$$

$$G = A2 * Y + B2 * Cb + C2 * Cr + D2 \qquad (3b)$$

$$B = A3 * Y + B3 * Cb + C3 * Cr + D3 \qquad (3c)$$

where A1-A3, B1-B3, C1-C3, and D1-D3 are parameters predetermined and provided by the driver 16; the color space conversion conforms to one of the standards for converting color space from YCbCr to RGB for standard-definition television (SDTV), and is commonly known as ITU-R BT.601 published by the International Telecommunication Union (ITU). However, other standard, such as ITU-R BT.709 for high-definition television (HDTV), may be adapted as well.

Generally speaking, the driver 16 predetermines or pre-calculates pertinent parameters, which are then provided to the flexible CSC 10 as follows, thereby simultaneously performing the color adjustment and converting the color space from YUV to RGB:

$$R = X1 * Y + Y1 * U + Z1 * V + W1 \qquad (4a)$$

$$G = X2 * Y + Y2 * U + Z2 * V + W2 \qquad (4b)$$

$$B = X3 * Y + Y3 * U + Z3 * V + W3 \qquad (4c)$$

or in matrix notation,

$$\begin{bmatrix} R & G & B \end{bmatrix} = \begin{bmatrix} Y & U & V & 1 \end{bmatrix} \times \begin{bmatrix} X1 & X2 & X3 \\ Y1 & Y2 & Y3 \\ Z1 & Z2 & Z3 \\ W1 & W2 & W3 \end{bmatrix} \qquad (4d)$$

where, as recommended by Society of Motion Picture and Television Engineers (SMPTE), Y generally designates a (non-gamma-corrected) luminance or (gamma-corrected) luma value, U and V generally designate (non-gamma-corrected) chrominance or (gamma-corrected) chroma values.

Specifically, the equations 4 a-4c or 4d is predetermined or pre-calculated by the driver 16 according to the following equations 5-6, in which the first equation 5 is utilized to perform color adjustment on the image data YUV, and the second equation 6 is utilized to convert the color space of the adjusted image data Y'U'V' to RGB:

$$\begin{bmatrix} Y' & U' & V' \end{bmatrix} = \begin{bmatrix} Y & U & V & 1 \end{bmatrix} \times \begin{bmatrix} A1 & A2 & A3 \\ B1 & B2 & B3 \\ C1 & C2 & C3 \\ D1 & D2 & D3 \end{bmatrix} \qquad (5)$$

$$\begin{bmatrix} R & G & B \end{bmatrix} = \begin{bmatrix} Y' & U' & V' & 1 \end{bmatrix} \times \begin{bmatrix} A1' & A2' & A3' \\ B1' & B2' & B3' \\ C1' & C2' & C3' \\ D1' & D2' & D3' \end{bmatrix} \qquad (6)$$

Combining the equations 5 and 6, the general equation 4d for the flexible CSC 10 is thus derived as shown below:

$$[R \quad G \quad B] = [Y' \quad U' \quad V' \quad 1] \times \begin{bmatrix} A1' & A2' & A3' \\ B1' & B2' & B3' \\ C1' & C2' & C3' \\ D1' & D2' & D3' \end{bmatrix}$$

$$= [Y \quad U \quad V \quad 1] \times \begin{bmatrix} A1 & A2 & A3 & 0 \\ B1 & B2 & B3 & 0 \\ C1 & C2 & C3 & 0 \\ D1 & D2 & D3 & 1 \end{bmatrix} \times \begin{bmatrix} A1' & A2' & A3' \\ B1' & B2' & B3' \\ C1' & C2' & C3' \\ D1' & D2' & D3' \end{bmatrix}$$

$$= [Y \quad U \quad V \quad 1] \times \begin{bmatrix} X1 & X2 & X3 \\ Y1 & Y2 & Y3 \\ Z1 & Z2 & Z3 \\ W1 & W2 & W3 \end{bmatrix}$$

Accordingly, the driver 16 predetermines the following parameters (X1-X3, Y1-Y3, Z1-Z3 and W1-W3) as shown below, and provides the resultant parameters to the flexible CSC 10:

$$\begin{bmatrix} X1 & X2 & X3 \\ Y1 & Y2 & Y3 \\ Z1 & Z2 & Z3 \\ W1 & W2 & W3 \end{bmatrix} = \begin{bmatrix} A1 & A2 & A3 & 0 \\ B1 & B2 & B3 & 0 \\ C1 & C2 & C3 & 0 \\ D1 & D2 & D3 & 1 \end{bmatrix} \times \begin{bmatrix} A1' & A2' & A3' \\ B1' & B2' & B3' \\ C1' & C2' & C3' \\ D1' & D2' & D3' \end{bmatrix} \qquad (7)$$

Although a color space conversion from YUV to RGB is illustrated here, the YUV and RGB may be interchanged for another application, resulting in a color space conversion from RGB to YUV by the following equation 8:

$$[Y \quad U \quad V] = [R \quad G \quad B \quad 1] \times \begin{bmatrix} X1' & X2' & X3' \\ Y1' & Y2' & Y3' \\ Z1' & Z2' & Z3' \\ W1' & W2' & W3' \end{bmatrix} \qquad (8)$$

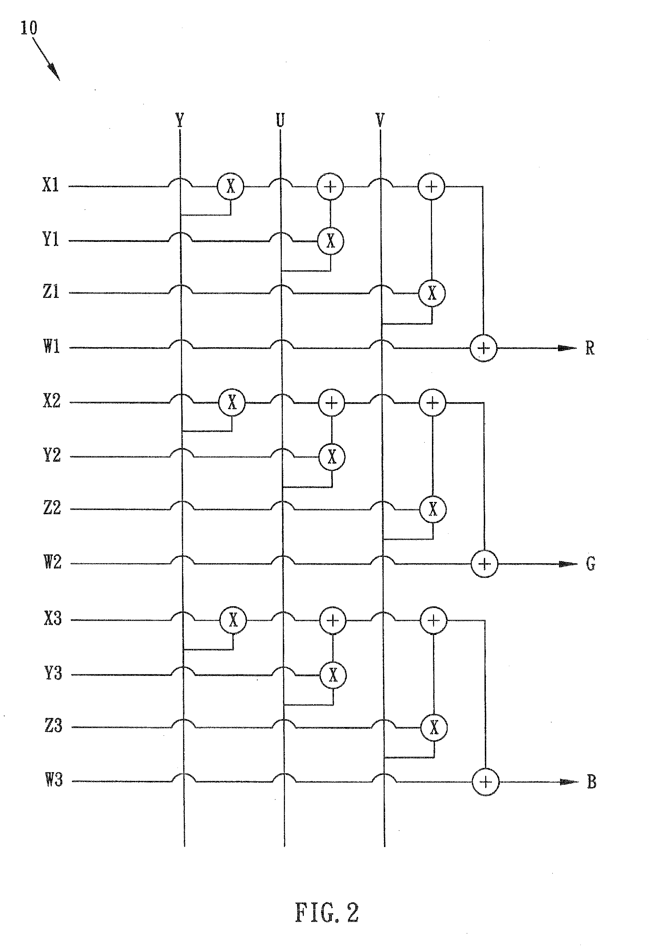

Fig. 2 shows a detailed circuit of the flexible CSC 10. The flexible CSC 10 includes multipliers designated as X in a circle and adders designated as + in a circle. In the embodiment, the multiplier has two input terminals, where one terminal receives one parameter (i.e., X1-X3, Y1-Y3, Z1-Z3, or W1-W3) provided by the driver 16, and the other terminal receives the image data (i.e., Y, U, or V). The adder has two input terminals receiving the outputs of two multipliers, respectively. It is appreciated by the person skilled in the art that the arrangement of Fig. 2 may be equivalently modified into other form. For example, the three two-input adders shown at the top of Fig. 2 may be substituted by a four-input adder that receives the outputs of the uppermost three multipliers and the parameter W1.

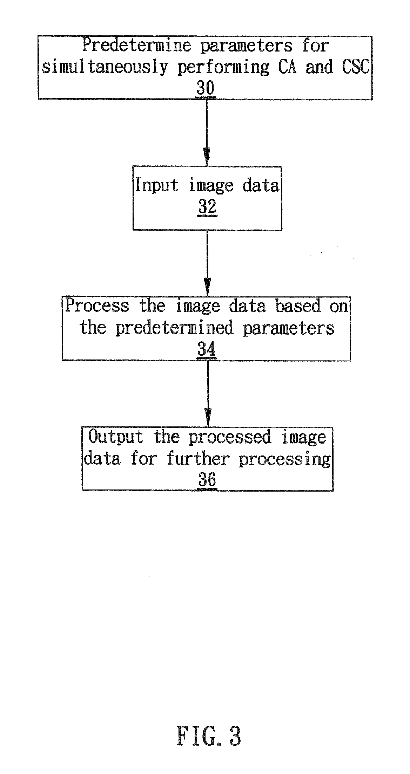

Fig. 3 shows a flow chart illustrating a method of image processing according to one embodiment of the present invention. In the block 30, the driver 16 predetermines or pre-calculates parameters for simultaneously performing the color adjustment (CA) and the color space conversion (CSC) according to the equation 7. Consequently, in block 32, image data are inputted to the flexible CSC 10, and then are processed based on the predetermined parameters according to the equations 4a-4c or 4d (block 34), thereby simultaneously performing the color adjustment and the color space conversion in one operation. Finally, the processed image data are outputted (block 36) for further processing, such as, but not limited to displaying the converted image data on a display, temporarily or permanently storing the converted image data in a memory, or transmitting the converted image data to another processor or another computer.

Compared to the conventional video processor as described in the above-discussed section "Background of the Invention," the present invention provides a simplified single-module system and method, in which the color adjustment and the color space conversion are simultaneously performed in one operation rather than multi-operations. To put it another way, after the operation of equation 7 is performed or executed only once, the resultant parameters are repeatedly applied on all the image data (of a frame or frames) under processing. On the contrary, in the conventional video processor, at least two sets of parameters are utilized for the two modules respectively, such that at least two operations, for example equations 5 and 6, are required to be executed for each pixel. Accordingly, considerable time and abundant of energy are preserved in the present invention, and area of the processor chip could also be reduced.

Moreover, as mentioned above, the conventional multi-module video processor induces significant accumulated loss of degree of accuracy because each module usually drops some least significant bit(s) before or after its respective operation. On the contrary, the single-module structure of the present invention evidently reduces or even obviates such accumulation of accuracy loss.

In addition to the aforementioned advantages, the present invention further furnishes scalability capacity that, for example, could accommodate more functions or applications into the image processing. For example, a conventional gamma correction could be brought into the driver 16, so that the gamma correction function could be beforehand merged together with the color adjustment (CA) and the color space conversion (CSC). Accordingly, no matter a conventional function or a newly developed function, it could be brought into the image processing without physically adding any module or circuitry for that added function. Equivalently speaking, the original video processor could be adapted for an image processing having a new or more complex function. The scalability is one of the reasons why the converter 10 according to one embodiment of the present invention is thus dubbed as "flexible" CSC.

Although specific embodiments have been illustrated and described, it will be appreciated by those skilled in the art that various modifications may be made without departing from the scope of the present invention, which is intended to be limited solely by the appended claims.

**Claims**

1. A system of image processing, comprising:

   a driver that predetermines parameters associated with color adjustment and color space conversion; and
   a converter that simultaneously performs the color adjustment and the color space conversion on image data according to the parameters predetermined by the driver.

2. The system according to claim 1, further comprising a video source that provides the image data to the converter.

3. The system according to claim 1, further comprising a video destination for further processing the image data out of the converter.

4. The system according to claim 3, wherein the video destination stores, displays, or transmits the image data out of the converter.

5. The system according to claim 1, wherein the converter inputs image data YUV from the video source, wherein the Y designates luminance or luma value, the U and V designate chrominance or chroma values.

6. The system according to claim 5, wherein resultant image data RGB out of the converter has a relationship according to an equation as follows:

$$[R \quad G \quad B] = [Y \quad U \quad V \quad 1] \times \begin{bmatrix} X1 & X2 & X3 \\ Y1 & Y2 & Y3 \\ Z1 & Z2 & Z3 \\ W1 & W2 & W3 \end{bmatrix}$$

where X1-X3, Y1-Y3, Z1-Z3, and W1-W3 are the parameters predetermined by the driver.

**7.** The system according to claim 6, wherein the predetermined parameters of X1-X3, Y1-Y3, Z1-Z3, and W1-W3 are determined according to an equation as follows:

$$\begin{bmatrix} X1 & X2 & X3 \\ Y1 & Y2 & Y3 \\ Z1 & Z2 & Z3 \\ W1 & W2 & W3 \end{bmatrix} = \begin{bmatrix} A1 & A2 & A3 & 0 \\ B1 & B2 & B3 & 0 \\ C1 & C2 & C3 & 0 \\ D1 & D2 & D3 & 1 \end{bmatrix} \times \begin{bmatrix} A1' & A2' & A3' \\ B1' & B2' & B3' \\ C1' & C2' & C3' \\ D1' & D2' & D3' \end{bmatrix}$$

wherein A1-A3, B1-B3, C1-C3, and D1-D3 are constants associated with the color adjustment with respect to following relationship:

$$[Y' \quad U' \quad V'] = [Y \quad U \quad V \quad 1] \times \begin{bmatrix} A1 & A2 & A3 \\ B1 & B2 & B3 \\ C1 & C2 & C3 \\ D1 & D2 & D3 \end{bmatrix}$$

wherein Y'U'V' is color-adjusted image data,
and wherein A1'-A3', B1'-B3', C1'-C3', and D1'-D3' are constants associated with the color space conversion with respect to following relationship:

$$[R \quad G \quad B] = [Y' \quad U' \quad V' \quad 1] \times \begin{bmatrix} A1' & A2' & A3' \\ B1' & B2' & B3' \\ C1' & C2' & C3' \\ D1' & D2' & D3' \end{bmatrix}.$$

**8.** The system according to claim 7, wherein the A1'-A3', B1'-B3', C1'-C3', and D1'-D3' conform to a standard for converting color space from YCbCr to RGB for standard-definition television (SDTV), and is also known as ITU-R BT.601 published by the International Telecommunication Union (ITU).

**9.** The system according to claim 7, wherein the A1'-A3', B1'-B3', C1'-C3', and D1'-D3' conform to a standard for converting color space from YCbCr to RGB for high-definition television (HDTV), and is also known as ITU-R BT. 709 published by the International Telecommunication Union (ITU).

**10.** The system according to claim 1, further comprising a storage for storing the predetermined parameters.

**11.** The system according to claim 1, wherein the converter consists of a single-module structure that processes the image data only based on the single set of the predetermined parameters.

**12.** A method of image processing, comprising:

predetermining parameters associated with color adjustment and color space conversion;
providing image data that represent image signals; and
simultaneously performs the color adjustment and the color space conversion on the image data according to a single set of the predetermined parameters, said performed image data being stored, displayed, transmitted, or subject to further processing.

**13.** The method according to claim 12, wherein the provided image data are image data YUV, wherein the Y designates luminance or luma value, the U and V designate chrominance or chroma values.

**14.** The method according to claim 13, wherein the performed image data are image data RGB, which has a relationship with the image data YUV according to an equation as follows:

$$\begin{bmatrix} R & G & B \end{bmatrix} = \begin{bmatrix} Y & U & V & 1 \end{bmatrix} \times \begin{bmatrix} X1 & X2 & X3 \\ Y1 & Y2 & Y3 \\ Z1 & Z2 & Z3 \\ W1 & W2 & W3 \end{bmatrix}$$

where X1-X3, Y1-Y3, Z1-Z3, and W1-W3 are the predetermined parameters.

**15.** The method according to claim 14, wherein the predetermined parameters of X1-X3, Y1-Y3, Z1-Z3, and W1-W3 are determined according to an equation as follows:

$$\begin{bmatrix} X1 & X2 & X3 \\ Y1 & Y2 & Y3 \\ Z1 & Z2 & Z3 \\ W1 & W2 & W3 \end{bmatrix} = \begin{bmatrix} A1 & A2 & A3 & 0 \\ B1 & B2 & B3 & 0 \\ C1 & C2 & C3 & 0 \\ D1 & D2 & D3 & 1 \end{bmatrix} \times \begin{bmatrix} A1' & A2' & A3' \\ B1' & B2' & B3' \\ C1' & C2' & C3' \\ D1' & D2' & D3' \end{bmatrix}$$

wherein A1-A3, B1-B3, C1-C3, and D1-D3 are constants associated with the color adjustment with respect to following relationship:

$$\begin{bmatrix} Y' & U' & V' \end{bmatrix} = \begin{bmatrix} Y & U & V & 1 \end{bmatrix} \times \begin{bmatrix} A1 & A2 & A3 \\ B1 & B2 & B3 \\ C1 & C2 & C3 \\ D1 & D2 & D3 \end{bmatrix}$$

wherein Y'U'V' is color-adjusted image data,
and wherein A1'-A3', B1'-B3', C1'-C3' and D1'-D3' are constants associated with the color space conversion with respect to following relationship:

$$\begin{bmatrix} R & G & B \end{bmatrix} = \begin{bmatrix} Y' & U' & V' & 1 \end{bmatrix} \times \begin{bmatrix} A1' & A2' & A3' \\ B1' & B2' & B3' \\ C1' & C2' & C3' \\ D1' & D2' & D3' \end{bmatrix}.$$

16. The method according to claim 15, wherein the A1'-A3', B1'-B3', C1'-C3', and D1'-D3' conform to a standard for converting color space from YCbCr to RGB for standard-definition television (SDTV), and is also known as ITU-R BT.601 published by the International Telecommunication Union (ITU).

17. The method according to claim 15, wherein the A1'-A3', B1'-B3', C1'-C3', and D 1'-D3' conform to a standard for converting color space from YCbCr to RGB for high-definition television (HDTV), and is also known as ITU-R BT. 709 published by the International Telecommunication Union (ITU).

Driver <u>16</u>

Storage <u>18</u>

Video Source <u>12</u> → Flexible CSC <u>10</u> → Video Destination <u>14</u>

FIG. 1

FIG. 2

```
┌─────────────────────────────────────┐
│      Predetermine parameters for     │
│ simultaneously performing CA and CSC │
│                 30                   │
└─────────────────────────────────────┘
                    │
                    ▼
          ┌───────────────────┐
          │  Input image data │
          │        32         │
          └───────────────────┘
                    │
                    ▼
      ┌─────────────────────────────┐
      │ Process the image data based on │
      │  the predetermined parameters │
      │               34              │
      └─────────────────────────────┘
                    │
                    ▼
       ┌─────────────────────────────┐
       │  Output the processed image  │
       │ data for further processing  │
       │             36               │
       └─────────────────────────────┘
```

FIG. 3

**European Patent Office**

**EUROPEAN SEARCH REPORT**

Application Number

EP 07 10 8241

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 579 224 A1 (FUJI XEROX CO LTD [JP]) 19 January 1994 (1994-01-19) | 1-4,12 | INV. H04N9/67 H04N9/68 |
| A | * page 9, line 22 - line 37 * | 5-11, 13-17 | |
| | ----- | | |
| X | US 6 201 530 B1 (THADANI SANJEET [US] ET AL) 13 March 2001 (2001-03-13) | 1-5,12, 13 | |
| A | * column 4, line 7 - line 65 * | 6-11, 14-17 | |
| | ----- | | |
| X | US 6 198 552 B1 (NAGAE TAKESHI [JP]) 6 March 2001 (2001-03-06) * column 5, line 61 - column 6, line 5 * * column 6, line 66 - column 7, line 8 * * column 21, line 43 - column 22, line 77 * | 1,12 | |
| | ----- | | |

TECHNICAL FIELDS SEARCHED (IPC)

H04N

The present search report has been drawn up for all claims

| Place of search | Date of completion of the search | Examiner |
|---|---|---|
| The Hague | 30 August 2007 | Pigniez, Thierry |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**EP 1 993 293 A1**

**ANNEX TO THE EUROPEAN SEARCH REPORT
ON EUROPEAN PATENT APPLICATION NO.** EP 07 10 8241

This annex lists the patent family members relating to the patent documents cited in the above-mentioned European search report.
The members are as contained in the European Patent Office EDP file on
The European Patent Office is in no way liable for these particulars which are merely given for the purpose of information.

30-08-2007

| Patent document cited in search report | | Publication date | Patent family member(s) | | Publication date |
|---|---|---|---|---|---|
| EP 0579224 | A1 | 19-01-1994 | DE | 69321889 D1 | 10-12-1998 |
| | | | DE | 69321889 T2 | 29-07-1999 |
| | | | JP | 3309431 B2 | 29-07-2002 |
| | | | JP | 6038032 A | 10-02-1994 |
| US 6201530 | B1 | 13-03-2001 | NONE | | |
| US 6198552 | B1 | 06-03-2001 | JP | 11055538 A | 26-02-1999 |

EPO FORM P0459